# EUROPEAN PATENT SPECIFICATION

(11) **EP 4 083 751 B1**
(45) Date of publication and mention of the grant of the patent: **17.04.2024**
(21) Application number: 19957396.5
(22) Date of filing: 25.12.2019
(51) Int. Cl.: G06F 3/01, G06F 3/0346, G06F 3/048, H04M 1/72454

(54) **INFORMATION PROCESSING DEVICE, PROGRAM, AND METHOD**
INFORMATIONSVERARBEITUNGSVORRICHTUNG, PROGRAMM UND VERFAHREN
DISPOSITIF DE TRAITEMENT D'INFORMATIONS, PROGRAMME ET PROCÉDÉ

(43) Date of publication of application: 02.11.2022
(73) Proprietor: Sony Group Corporation, Tokyo 108-0075 (JP)
(72) Inventor: KURIYAMA, Hiroaki, Tokyo 140-0002 (JP); AKAO, Keiichi, Tokyo 140-0002 (JP)
(74) Representative: D Young & Co LLP
(86) International application number: PCT/JP2019/050993
(87) International publication number: WO 2021/130937

(56) References cited:
- WO-A1-2013/111590
- WO-A1-2016/079828
- WO-A1-2017/104227
- JP-A- 2012 191 445
- JP-A- 2015 005 173
- JP-A- 2015 011 675
- JP-A- 2015 141 700
- JP-A- 2017 084 086
- US-A1- 2009 088 204
- US-A1- 2014 380 209
- US-A1- 2016 188 189

## Description

### Field

The present disclosure relates to an information processing device, a program, and a method.

### Background

An information processing device including a touchscreen display, such as a smartphone, is operated with one hand on a daily basis. Meanwhile, the touchscreen display has been increased in resolution and size, which makes it difficult to operate the touchscreen display with one hand in some cases (e.g., a case where a touch operation is performed on the upper right or lower right of a screen while the device is being held with a left hand).

Patent Literature 1 discloses that, when a user performs a touch operation as if to pull a screen with his/her finger (e.g., a swipe operation from the upper left to the lower right), the entire screen or a part of the screen is moved as if pulled, which allows the user to easily operate a position far from the finger. Patent Literature 2 discloses that, when a user tilts a device in order to enlarge or reduce a screen with one hand, a part of the screen is enlarged or reduced.

### Citation List

### Patent Literature

Patent Literature 1: US 2016/0,034,131 A
Patent Literature 2: JP 2013-140469 A
Other patent literature includes US 2016/188189A, US 2009/088204A and US 2014/380209A.

### Summary

### Technical Problem

In the related arts, however, a touch operation is also required to allow the user to easily operate the position far from the finger, and, even if the device is tilted to enlarge or reduce the screen, a position where the user attempts to perform operation is not always appropriately displayed. This lacks usability.

In view of this, the present disclosure proposes an information processing device, a program, and a method capable of determining a position where the user attempts to perform operation on a screen of the information processing device, without impairing usability.

### Solution to Problem

The invention is set out in claim 1 with preferred embodiments being set out in the dependent claims.

### Brief Description of Drawings

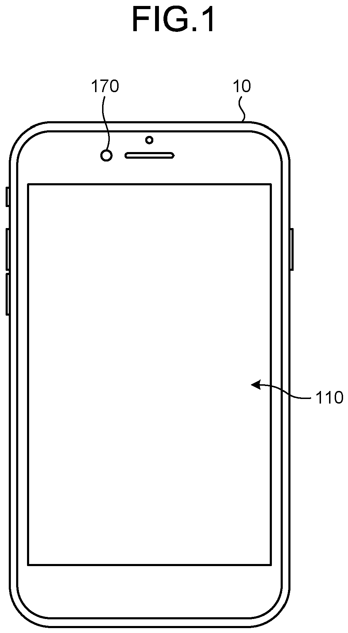

FIG. 1 illustrates an example of an information processing device 10 according to the present embodiment.
FIG. 2 is a block diagram illustrating a functional configuration example of the information processing device 10 according to the embodiment.
FIG. 3 illustrates an example of acceleration and angular velocity according to the embodiment.
FIG. 4 illustrates an example of a gyro waveform at each operation position according to the embodiment.
FIG. 5 illustrates an example of operation modes according to the embodiment.
FIG. 6 illustrates an example of an operation range and a direction of gravity according to the embodiment.
FIG. 7 illustrates another example of the operation range and the direction of gravity according to the embodiment.
FIG. 8 illustrates still another example of the operation range and the direction of gravity according to the embodiment.
FIG. 9 illustrates an example of a one-hand mode according to the embodiment.
FIG. 10 illustrates another example of the one-hand mode according to the embodiment.
FIG. 11 is a flowchart illustrating a flow of user operation position determination processing according to the embodiment.
FIG. 12 illustrates an example of a front-facing camera image at each operation position according to the embodiment.
FIG. 13 illustrates an example of an extended function of the one-hand mode according to the embodiment.
FIG. 14 illustrates another example of the extended function of the one-hand mode according to the embodiment.
FIG. 15 is a block diagram illustrating a hardware configuration example of the information processing device 10 according to the embodiment.

### Description of Embodiments

Hereinafter, an embodiment of the present disclosure will be described in detail with reference to the drawings. In the present specification and the drawings, substantially the same parts are denoted by the same reference signs, and repeated description thereof will be omitted.

Description will be provided in the following order.
1. Embodiment
   1.1. Functional configuration example
   1.2. Details of function
   1.3. Flow of function
2. Modification examples of embodiment
   2.1. First modification example
   2.2. Second modification example
   2.3. Other modification examples
3. Hardware configuration example
4. Summary

### <1. Embodiment>

### <<1.1. Functional configuration example>>

First, an information processing device 10 according to the present embodiment will be described. The information processing device 10 is a device that allows a touchscreen display to be operated with one hand and may be, for example, a mobile terminal such as a smartphone or a tablet personal computer (PC) or a digital camera. The information processing device 10 includes a display unit 110 such as a touchscreen display. The information processing device 10 may further include an imaging unit 170 such as a front-facing camera.

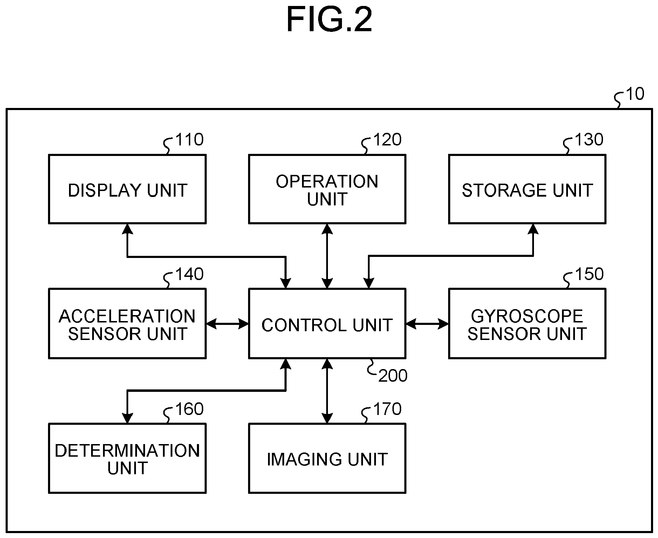

FIG. 2 is a block diagram illustrating a functional configuration example of the information processing device 10 according to the present embodiment. As illustrated in FIG. 2, the information processing device 10 according to the present embodiment includes the display unit 110, an operation unit 120, a storage unit 130, an acceleration sensor unit 140, a gyroscope sensor unit 150, a determination unit 160, the imaging unit 170, and a control unit 200.

### (Display unit 110)

The display unit 110 according to the present embodiment displays various kinds of visual information under the control of the control unit 200. The display unit 110 may display, for example, an image, a character, and the like related to an application. For this purpose, the display unit 110 according to the present embodiment includes various display devices such as a liquid crystal display (LCD) device and an organic light emitting diode (OLED) display device. The display unit 110 adjusts and displays the screen so that the user can easily operate the screen when operating the screen with one hand.

### (Operation unit 120)

The operation unit 120 according to the present embodiment detects various user operations, such as a device operation for an application. The device operations described above include, for example, a touch operation. Herein, the touch operation indicates various touch operations on the display unit 110 such as tapping, double tapping, swiping, and pinching. The touch operation also includes an operation of bringing an object such as a finger close to the display unit 110. The operation unit 120 according to the present embodiment includes, for example, a touchscreen, a button, a keyboard, a mouse, and a proximity sensor. The operation unit 120 according to the present embodiment inputs information regarding the detected user operations to the control unit 200.

### (Storage unit 130)

The storage unit 130 according to the present embodiment is a storage area for temporarily or permanently storing various programs and data. For example, the storage unit 130 may store programs and data for the information processing device 10 executing various functions. As a specific example, the storage unit 130 may store programs for executing various applications and management data for managing various settings. As a matter of course, the above is merely an example, and the type of data to be stored in the storage unit 130 is not particularly limited.

### (Acceleration sensor unit 140)

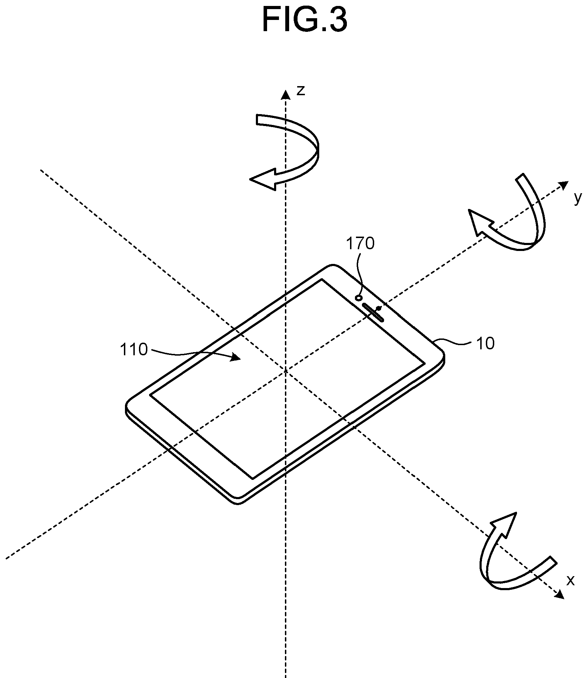

The acceleration sensor unit 140 according to the present embodiment measures acceleration (velocity per unit time) of the information processing device 10. FIG. 3 illustrates an example of acceleration and angular velocity according to the present embodiment. As illustrated in FIG. 3, for example, the acceleration sensor unit 140 measures accelerations (aₓ, a_{y}, a_{z}) in the x-axis, y-axis, and z-axis (three axis) directions, respectively. The acceleration sensor unit 140 recognizes gravity as an acceleration in a direction of gravity and can therefore detect a tilt and the like of the information processing device 10.

### (Gyroscope sensor unit 150)

The gyroscope sensor unit 150 according to the present embodiment measures angular velocity (an amount of change in angle per unit time) of the information processing device 10. As illustrated in FIG. 3, for example, the gyroscope sensor unit 150 measures angular velocities (ωₓ, ω_{y}, ω_{z}) in a case where the x, y, and z axes are set as a center, respectively.

### (Determination unit 160)

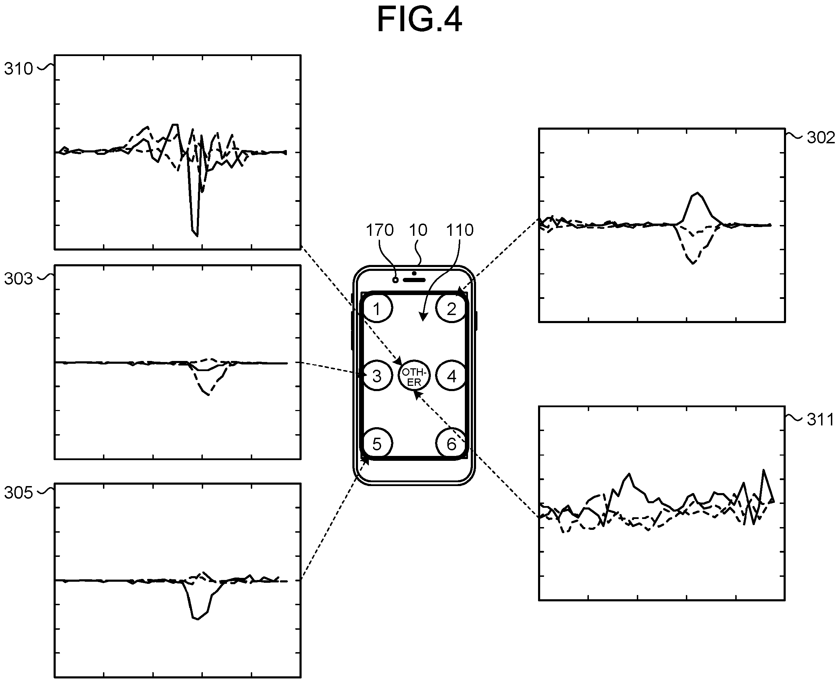

In response to detection of a tilt (corresponding to a first tilt) of the information processing device 10 by the acceleration sensor unit 140, the determination unit 160 according to the present embodiment determines a position where the user attempts to perform operation on the display unit 110 on the basis of a gyro waveform obtained from the angular velocity measured by the gyroscope sensor unit 150 and a gyro waveform at each operation position of the information processing device 10 measured in advance. Alternatively, the determination unit 160 estimates (determines) the position where the user attempts to perform operation on the basis of the gyro waveform obtained from the angular velocity measured by the gyroscope sensor unit 150 by using a learning model generated by using the gyro waveform at each operation position as training data. FIG. 4 illustrates an example of the gyro waveform at each operation position according to the present embodiment. In graphs 302 to 311, the horizontal axis represents time, and the vertical axis represents the angular velocity measured by the gyroscope sensor unit 150. In FIG. 4, each graph shows three gyro waveforms for the x, y, and z axes.

The graphs 302, 303, and 305 show gyro waveforms obtained in a case where the user operates operation positions "2", "3", and "5" of the display unit 110 with one hand, respectively. When the user operates each operation position of the display unit 110 with one hand, the way of tilting the information processing device 10 and velocity thereof are different at each operation position. Thus, characteristics appear in each gyro waveform (angular velocity). Therefore, the information processing device 10 measures the gyro waveform (angular velocity) at each operation position in advance and then extracts and stores the characteristics of each gyro waveform (e.g., intensity of the angular velocity, an amount of temporal change (the way of rise of the waveform), and a ratio of ωₓ, ω_{y}, and ω_{z}). Then, the determination unit 160 analyzes characteristics of a gyro waveform in a case where the user actually attempts to perform operation and can therefore determine which position the user attempts to perform operation.

The determination unit 160 can also use machine learning at this time. For example, it is possible to prepare about 100 gyro waveforms at each operation position in advance and perform machine learning by using those gyro waveforms as training data. In this way, a learned model for estimating a user operation position is generated. In a case where a gyro waveform is input, the learned model outputs a corresponding operation position. The learned model is stored in the information processing device 10, and thus it is possible to estimate to which operation position a gyro waveform obtained when the user actually performs operation corresponds. Note that, for example, deep learning such as convolutional neural network (CNN) is used as the machine learning.

The gyro waveforms of the graphs 310 and 311 indicate a state in which the information processing device 10 is strongly shaken or is slowly and greatly moved. Those are, for example, gyro waveforms (angular velocities) obtained in a case where the user moves while leaving the information processing device in his/her bag or holding the information processing device 10 in his/her hand (i.e., a state in which the information processing device is not operated). In such gyro waveforms, the determination unit 160 can determine that the user does not perform operation at any position of the display unit 110 (in this case, in FIG. 4, such operations are classified into "OTHER" indicating other operations).

The gyro waveforms at each operation position are different for each user even though the operation position is the same (for example, the information processing device is tiled to be pulled closer to the user or is tilted back, i.e., is variously operated depending on users even at the same operation position). Therefore, in order to optimize the determination for each user, it is possible to generate a new learned model by, for example, preparing a measurement mode in the information processing device 10, measuring gyro waveforms at each operation position for each user, and relearning the measured gyro waveforms as training data. This makes it possible to improve determination accuracy for each user.

The gyro waveforms at each operation position are different depending on with which hand the user performs operation even though the operation position is the same. Therefore, in a case where there is a possibility that the information processing device is operated with either hand, it is possible to measure and store, in advance, both gyro waveforms obtained by performing operation with right hand and with left hand at each operation position. Therefore, even if the user uses either right or left hand when the user performs operation with one hand, it is possible to selectively use the gyro waveforms for right hand and the gyro waveforms for left hand, thereby improving the determination accuracy.

The determination unit 160 determines a rotation direction of the information processing device 10 on the basis of the angular velocity measured by the gyroscope sensor unit 150 (in which direction the information processing device 10 is tilted, that is, the rotation direction can be found on the basis of the angular velocity). Then, the determination unit 160 determines the position where the user attempts to perform operation on the display unit 110 on the basis of the rotational speed.

In response to detection of a second tilt different from the first tilt after the detection of the first tilt of the information processing device 10, the determination unit 160 determines whether or not the user attempts to return the tilt of the information processing device 10 to an original state (i.e., an original angle), that is, a state before the first tilt is detected with the second tilt.

Further, the determination unit 160 determines a direction of the information processing device 10 on the basis of the tilt of the information processing device 10 and the direction of gravity with respect to the information processing device 10 measured and detected by the acceleration sensor unit 140. Details thereof will be described later.

The determination unit 160 determines whether the user holds the information processing device 10 with the right hand or left hand on the basis of a position and track of a swipe operation performed on the display unit 110. For example, in a case where the swipe operation is performed on the display unit 110 from left to right, generally, an arc is drawn from left to right when the information processing device is held in the right hand, whereas an arc is drawn from right to left when the information processing device is held in the left hand. The information processing device 10 also causes the user to perform such a swipe operation with the right hand and with the left hand, stores positions and tracks of the swipe operations for each user in advance, and can therefore use the positions and tracks thereof for the determination by the determination unit 160.

Based on a result of such the determination on in which hand the information processing device 10 is held, the determination unit 160 can selectively use the gyro waveforms for right hand and the gyro waveforms for left hand in order to determine the position where the user attempts to perform operation on the display unit 110.

Based on an actual user operation after the determination on the position where the user attempts to perform operation on the display unit 110, the determination unit 160 determines whether or not the determination on the position where the user attempts to perform operation is correct. Therefore, it is possible to perform machine learning by using a result of the determination on whether or not the determination is correct as learning data and use a result of the machine learning for subsequent determination by the determination unit 160.

### (Imaging unit 170)

The imaging unit 170 according to the present embodiment images, for example, a face of the user who operates the information processing device 10 under the control of the control unit 200. For this purpose, the imaging unit 170 according to the present embodiment includes an imaging element. A smartphone, which is an example of the information processing device 10, includes a front-facing camera (front camera) for imaging the face or the like of the user on the display unit 110 side and a main camera for imaging a landscape or the like on the back side of the display unit 110.

### (Control unit 200)

The control unit 200 according to the present embodiment is a processing unit that controls the entire information processing device 10 and controls each configuration included in the information processing device 10. Details of the functions of the control unit 200 according to the present embodiment will be described later.

The functional configuration example of the information processing device 10 according to the present embodiment has been described above. The functional configuration described above with reference to FIG. 2 is merely an example, and the functional configuration of the information processing device 10 according to the present embodiment is not limited to such an example. For example, the information processing device 10 does not necessarily need to include all the configurations illustrated in FIG. 2, and a configuration such as the storage unit 130 can be included in a device other than the information processing device 10. The functional configuration of the information processing device 10 according to the present embodiment can be flexibly modified according to specifications and operations.

The function of each component may be performed in such a way that an arithmetic unit such as a CPU reads a control program in which a processing procedure for achieving those functions is written from a storage medium such as a read only memory (ROM) or random access memory (RAM) storing the control program and interprets and executes the program. Therefore, it is possible to appropriately change the configuration to be used in accordance with the technical level at the time of carrying out the present embodiment. An example of a hardware configuration of the information processing device 10 will be described later.

### <<1.2. Details of function>>

Next, the function of the information processing device 10 according to the present embodiment will be described in detail. The control unit 200 of the information processing device 10 uses the acceleration and the angular velocity measured by the acceleration sensor unit 140 and the gyroscope sensor unit 150, respectively, to determine the position where the user attempts to perform operation on the display unit 110 (hereinafter, referred to as "user operation position determination"), without impairing usability. In a case where the user performs operation with one hand and a position where the user attempts to perform the operation on the display unit 110 is a position where it is difficult for the user to perform the operation, the control unit 200 controls the display unit 110 to adjust the screen so that the user can easily perform the operation (hereinafter, referred to as "user operation support"). Note that the position where it is difficult for the user to perform operation indicates, for example, positions other than the operation position "3" in FIG. 4 in a case where the user holds the information processing device 10 with the left hand. Similarly, the position where it is difficult for the user to perform operation indicates, for example, positions other than the operation position "4" in a case where the user holds the information processing device with the right hand.

The user operation support is unnecessary in some cases depending on a usage state of the user, for example, in a case where the user operates the information processing device 10 in a lateral direction. In such a case, the adjustment of the screen by the user operation support may interrupt a user operation. In a case where the user operation support is unnecessary, the user operation position determination for determining whether or not the user operation support is necessary is also unnecessary. In this case, it is possible to stop the function of the gyroscope sensor unit 150 used for the user operation position determination, thereby reducing current consumption of the information processing device 10. In the present embodiment, an operation of each function is controlled by three operation modes.

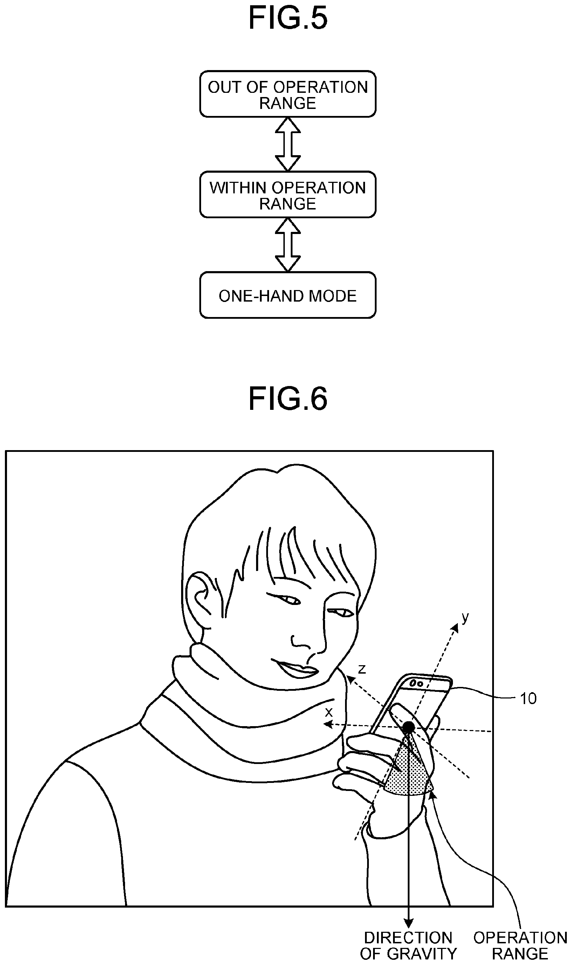

FIG. 5 illustrates an example of the operation modes according to the present embodiment. As illustrated in FIG. 5, there are three operation modes according to the present embodiment, and a "within operation range (mode)" is a main mode and is switched to an "out of operation range (mode)" or "one-hand mode". The "out of operation range" indicates a state in which the user operation support is unnecessary. In this case, it is possible to stop the function of the gyroscope sensor unit 150. The "within operation range" indicates a state in which the user operation position determination is being performed in order to determine whether or not the user operation support is necessary or a standby state for performing the user operation position determination. In this case, the function of the gyroscope sensor unit 150 is activated. The "one-hand mode" indicates a state in which the user operation support is necessary and the user operation support is being performed by screen adjustment or the like. Also in this case, the function of the gyroscope sensor unit 150 remains activated. In the present embodiment, a state in which the face of the user substantially faces the information processing device 10 is defined as the within operation range (a state in which the user seems to look at the screen).

The operation mode is switched by determining in which direction the user operates the information processing device 10 by using the acceleration and the angular velocity measured by the acceleration sensor unit 140 and the gyroscope sensor unit 150, respectively.

FIG. 6 illustrates an example of an operation range and the direction of gravity according to the present embodiment. In FIG. 6, the user vertically holds and operates the information processing device 10 with one hand. In a case where the user operates the information processing device 10 in such a direction, the operation mode is switched to the "within operation range". Specifically, as illustrated in FIG. 6, in a case where the direction of gravity captured by the acceleration sensor unit 140 is a direction within the operation range, it is determined that the direction of gravity falls within the operation range. As illustrated in FIG. 6, the operation range can have a certain margin. Although the operation range in FIG. 6 is illustrated as a planar range like a fan shape, the operation range is actually a space and will therefore be a three-dimensional range like a cone.

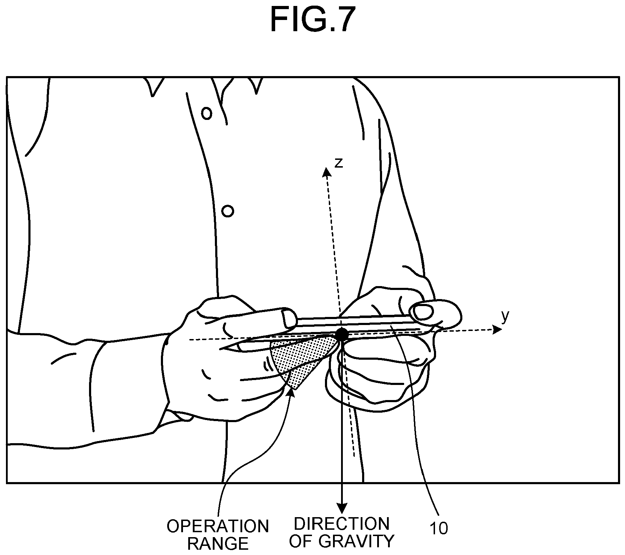

FIG. 7 illustrates another example of the operation range and the direction of gravity according to the present embodiment. In FIG. 7, the user laterally holds and operates the information processing device 10 with both hands. In a case where the user operates the information processing device 10 in such a direction, the control unit 200 can switch the operation mode to the "out of operation range". Specifically, as illustrated in FIG. 7, in a case where the direction of gravity is a direction out of the operation range, it is determined that the direction of gravity is out of the operation range. Note that the operation range in FIG. 7 and the operation range in FIG. 6 are the same. That is, the operation range is fixed with respect to the information processing device 10, and therefore it is possible to determine the direction of the information processing device 10 on the basis of the tilt of the information processing device 10 and the direction of gravity with respect to the information processing device 10

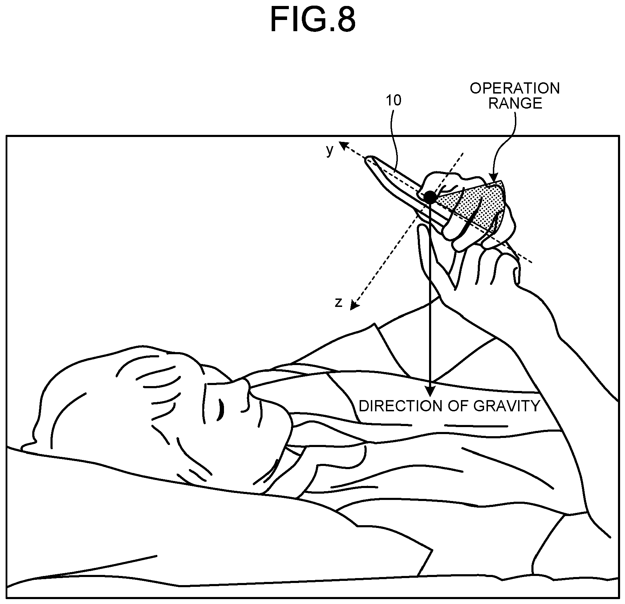

FIG. 8 illustrates still another example of the operation range and the direction of gravity according to the present embodiment. In FIG. 8, the user operates the information processing device 10 while lying down. Also in a case where the user operates the information processing device 10 in such a direction, the control unit 200 can switch the operation mode to the "out of operation range".

As described above, the direction of the information processing device 10 is determined on the basis of the tilt of the information processing device 10 and the direction of gravity with respect to the information processing device 10, and the operation mode is switched between the "within operation range" and the "out of operation range".

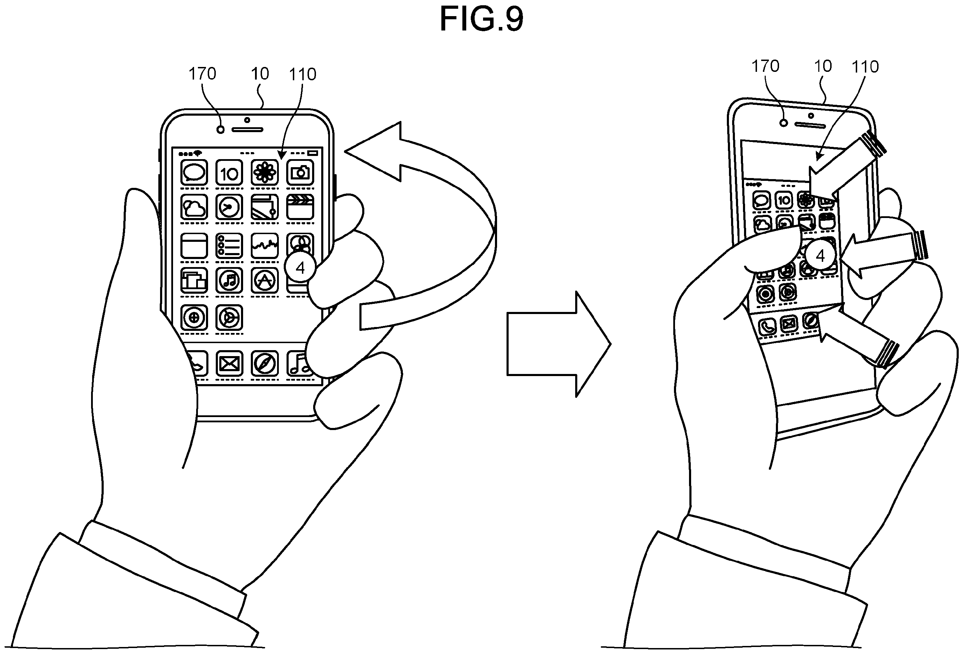

Switching of the operation mode between the "within operation range" and the "one-hand mode" and the user operation support in the "one-hand mode" will be described. FIG. 9 illustrates an example of the one-hand mode according to the present embodiment. A left part of FIG. 9 illustrates a state in which the user vertically holds the information processing device 10 with the left hand (the operation mode is the "within operation range") and attempts to perform operation at a position near the operation position "4" of the display unit 110 with his/her thumb. In the left part of FIG. 9, the information processing device 10 is tilted to the right. However, this is merely an example, and an actual movement of the information processing device 10 is different for each user.

For example, when detecting the tilt of the information processing device 10, the determination unit 160 of the information processing device 10 determines that the user attempts to perform operation at the operation position "4" on the basis of the gyro waveform obtained from the angular velocity measured by the gyroscope sensor unit 150 and the gyro waveform at each operation position of the information processing device 10 measured in advance or the learning model generated by using the gyro waveform as the training data.

In a case where the information processing device 10 is held with the left hand, the operation position "4" is a position where it is difficult to perform operation, and thus the operation mode is switched to the "one-hand mode". A right part of FIG. 9 illustrates a state in which the operation mode is switched to the "one-hand mode" and the screen is reduced. Therefore, the operation position "4" approaches from the right end of the display unit 110 toward the center thereof. This allows the user to easily perform operation at a position near the operation position "4".

When detecting a further tilt (corresponding to the second tilt) of the information processing device 10 after the screen is reduced as illustrated in the right part of FIG. 9, the determination unit 160 determines whether or not the tilt of the information processing device 10 has returned to an original state (the state in the left part of FIG. 9) with the second tilt. In a case where it is determined that the tilt of the information processing device 10 has returned to the original state, the screen is enlarged by the amount of reduction and returns to an original size (returns to the state in the left part of FIG. 9).

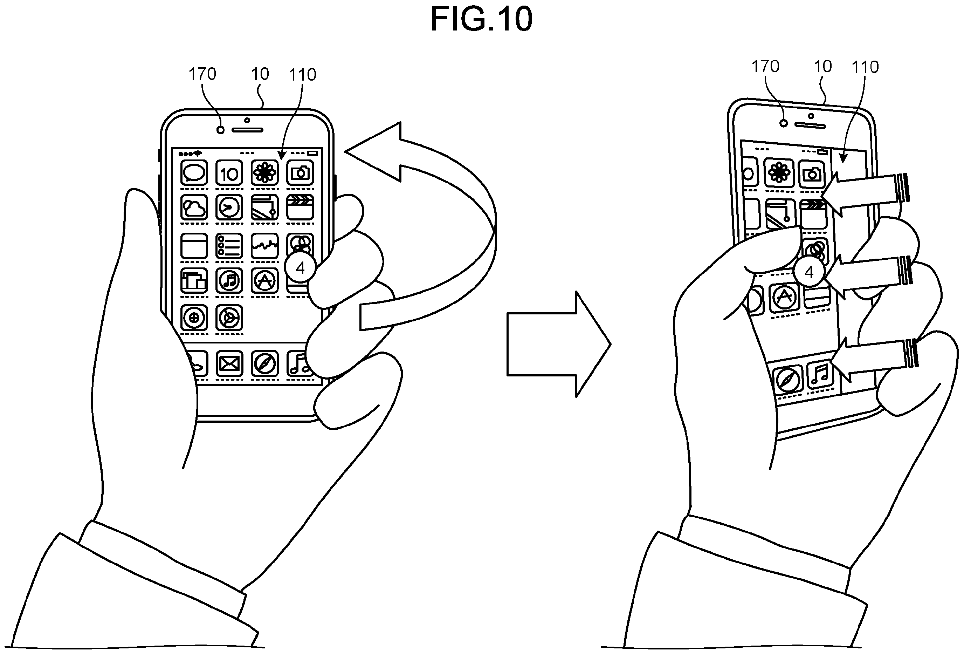

FIG. 10 illustrates another example of the one-hand mode according to the present embodiment. A left part of FIG. 10 is similar to the left part of FIG. 9. A right part of FIG. 10 illustrates a state in which the operation mode is switched to the "one-hand mode" and the entire screen is moved to the left. Therefore, the operation position "4" approaches from the right end of the display unit 110 toward the center thereof. This allows the user to easily perform operation at a position near the operation position "4".

In FIG. 10, as well as in FIG. 9, when detecting a further tilt of the information processing device 10 after the screen is moved, the determination unit 160 determines whether or not the tilt of the information processing device 10 has returned to the original state (the state in the left part of FIG. 10). In a case where it is determined that the tilt of the information processing device 10 has returned to the original state, the screen is moved to the right by the amount of movement to the left and returns to an original position.

### <<1.3. Flow of function>>

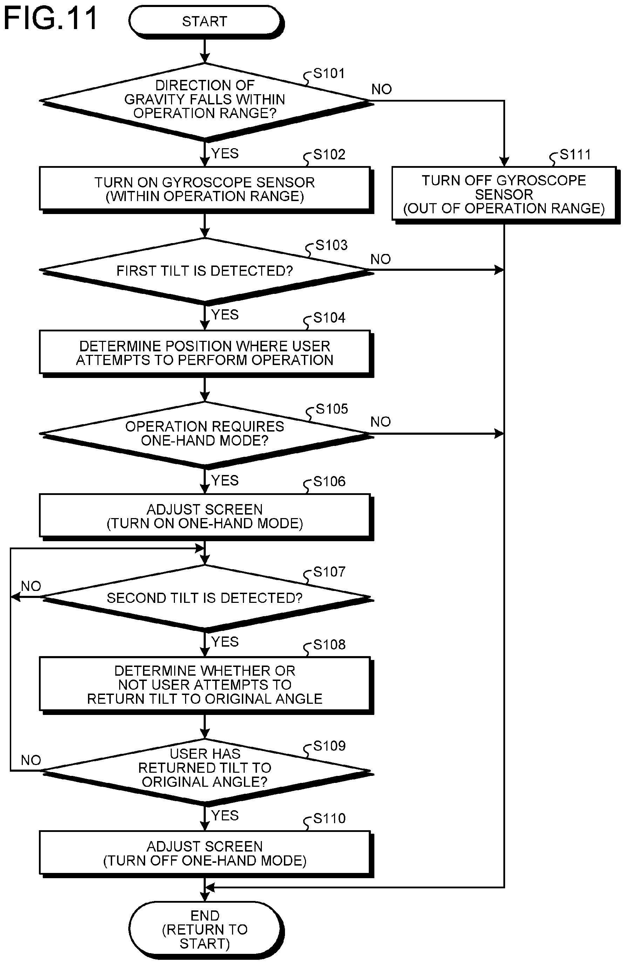

Next, a procedure of the user operation position determination processing according to the present embodiment will be described with reference to FIG. 11. FIG. 11 is a flowchart illustrating a flow of the user operation position determination processing according to the present embodiment. In the present processing, detection of a tilt by the information processing device 10 triggers determination on whether or not the operation mode is the "within operation range", and, in a case where the operation mode is the "within operation range", the user operation position determination is performed.

As illustrated in FIG. 11, first, the acceleration sensor unit 140 of the information processing device 10 determines whether or not the direction of gravity captured by the acceleration sensor unit 140 falls within a predetermined operation range (step S101).

In a case where the direction of gravity is out of the predetermined operation range (step S102: No) and the operation mode is not the "out of operation range", the control unit 200 switches the operation mode to the "out of operation range" and stops the function of the gyroscope sensor unit 150 (step Sill). After step Sill, the present processing ends (strictly speaking, the processing returns to the start of the present processing and waits until the direction of gravity falls within the operation range again) .

Meanwhile, in a case where the direction of gravity falls within the predetermined operation range (step S101: Yes) and the operation mode is not the "within operation range", the control unit 200 switches the operation mode to the "within operation range", activates the function of the gyroscope sensor unit 150 (step S102), and starts measurement of the angular velocity of the information processing device 10.

Next, the acceleration sensor unit 140 determines whether or not any first tilt has been detected (step S103). In a case where the first tilt is not detected (step S103: No), the present processing ends, and the processing returns to the start. In a case where the acceleration sensor unit 140 detects the first tilt (step S103: Yes), the determination unit 160 determines a position where the user attempts to perform operation on the basis of a gyro waveform obtained from the angular velocity whose measurement has been started in step S102 and a gyro waveform at each operation position measured and stored in advance (step S104). Alternatively, the determination unit 160 estimates (determines) the position where the user attempts to perform operation on the basis of the gyro waveform obtained from the angular velocity whose measurement has been started in step S102 by using a learning model generated by using the gyro waveform at each operation position as training data.

Next, the determination unit 160 determines whether or not an operation at the position where the user attempts to perform operation requires the one-hand mode (step S105). As described above, whether or not the operation requires the one-hand mode depends on whether or not the position where the user attempts to perform operation on the display unit 110 is a position where it is difficult to perform operation and whether or not the user operation support is necessary.

In a case where the operation does not require the one-hand mode (step S105: No), the present processing ends, and the processing returns to the start.

Meanwhile, in a case where the operation requires the one-hand mode (step S105: Yes), the control unit 200 switches the operation mode to the "one-hand mode", and the display unit 110 adjusts the screen so that the user can easily perform the operation (step S106) . The screen that allows the user to easily perform the operation is, for example, a screen in which the position where the user attempts to perform the operation on the display unit 110 is moved closer to the thumb of the user by reducing the size of the screen or moving the entire screen as illustrated in FIGS. 9 and 10.

Next, the acceleration sensor unit 140 and the gyroscope sensor unit 150 determine whether or not any second tilt has been detected (step S107). In a case where the second tilt is not detected (step S107: No), the acceleration sensor unit 140 and the gyroscope sensor unit 150 wait until the second tilt is detected. In a case where the acceleration sensor unit 140 and the gyroscope sensor unit 150 detect the second tilt (step S107: Yes), it is determined whether or not the user attempts to return the tilt of the information processing device 10 to an original angle (step S108).

In a case where the user does not return the tilt of the information processing device 10 to the original angle (step S109: No), it is determined that the "one-hand mode" is still necessary, and the acceleration sensor unit 140 further waits until the second tilt is detected (returns to step S107). Note that, although the tilt of the information processing device 10 has not returned to the original angle, the user operation support is further required in some cases. For example, there is a case where operation is performed at the operation position "4" in FIG. 4 and is then performed at the operation position "2" or "6". In such a case, the processing proceeds to step S106, and the display unit 110 can adjust the screen so that the user can easily perform the operation at the operation position "2" or "6".

Meanwhile, in a case where the user returns the tilt of the information processing device 10 to the original angle (step S109: Yes), it is determined that the "one-hand mode" is no longer necessary, and the control unit 200 switches the operation mode to the "within operation range", and the display unit 110 adjusts the screen again (step S110). The screen adjustment herein refers to returning the screen adjusted in step S106 as in the right part of FIG. 9 or the right part of FIG. 10 to the state of the left part of FIG. 9 or the left part of FIG. 10. After step S110, the present processing ends, and the processing returns to the start.

### <2. Modification examples of embodiment>

Next, modification examples of the present embodiment will be described. Note that the information processing device 10 may implement the modification examples described below instead of the above-described embodiment or may implement the modification examples in combination with the above-described embodiment.

### <<2.1. First modification example>>

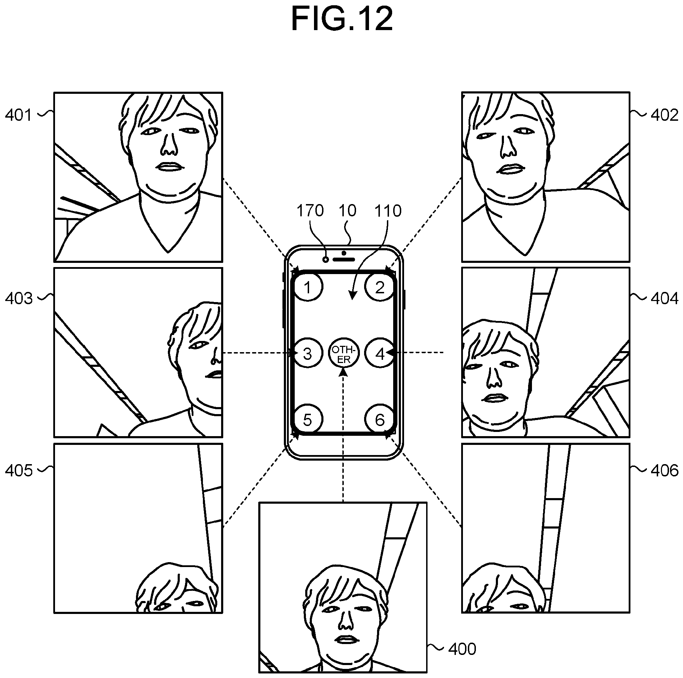

FIG. 12 illustrates an example of a front-facing camera image at each operation position according to the present embodiment. As illustrated in FIG. 12, the tilt of the information processing device 10 is different depending on a position where the user attempts to perform operation on the display unit 110, and thus a position of the user appearing in the front-facing camera image is also different. Therefore, it is possible to determine at which position on the display unit 110 the user attempts to perform operation on the basis of the position of the user appearing in the front-facing camera image.

The information processing device 10 images and stores a front-facing camera image at each operation position in advance, compares the front-facing camera image with a front-facing camera image obtained when the user actually attempts to perform operation, and can therefore determine at which position the user attempts to perform the operation. Note that the front-facing camera image does not need to be displayed on the display unit 110 and is obtained by internally converting a picture captured by the imaging unit 170 into digital data.

The position of the user appearing in the front-facing camera image, as well as the gyro waveform, is different for each user even though the operation position is the same. Further, even for the same user, the position of the user appearing in the front-facing camera image is different depending on with which hand the user operates the information processing device 10. Therefore, both front-facing camera images obtained by performing operation with the right hand and with the left hand at each operation position can be imaged and stored in advance for each user.

A plurality of front-facing camera images can be captured and stored in advance for one operation position for each user. The determination unit 160 can also determine the position where the user attempts to perform operation by using both the determination based on the gyro waveform (angular velocity) described above and the determination based on the front-facing camera image. This makes it possible to further improve the determination accuracy of the determination unit 160.

### <<2.2. Second modification example>>

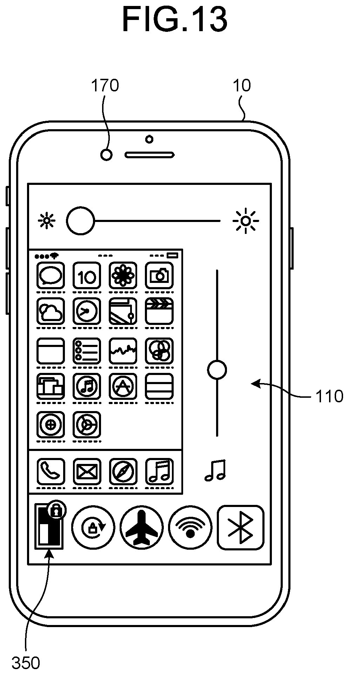

FIG. 13 illustrates an example of an extended function of the one-hand mode according to the present embodiment. As illustrated in FIG. 13, the control unit 200 can also perform control to display an arbitrary user interface (e.g., adjustment of volume and screen brightness and on/off of various functions) in a blank space of the display unit 110 when the screen is reduced as illustrated in the right part of FIG. 9. In particular, an icon 350 is a software button (toggle switch) that maintains the one-hand mode. When the user presses the icon 350, the state of the one-hand mode can be maintained until the icon 350 is pressed again even if, for example, the user returns the tilt of the information processing device 10 to the original angle.

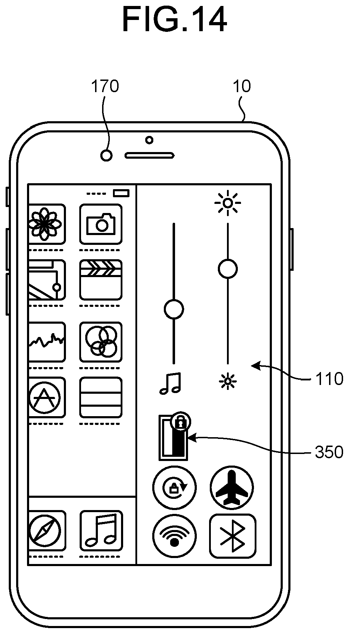

FIG. 14 illustrates another example of the extended function of the one-hand mode according to the present embodiment. In FIG. 14, as well as in FIG. 13, the control unit 200 can perform control to display an arbitrary user interface in the blank space of the display unit 110 when the entire screen is moved as illustrated in the right part of FIG. 10. The control illustrated in FIGS. 13 and 14 described above can further improve usability.

### <<2.3. Other modification examples>>

As another modification example, the control unit 200 can perform control so that content displayed on the display unit 110 is switched to another content depending on a position where the user attempts to perform operation, the position being determined by the determination unit 160.

Further, the control unit 200 can perform control to switch a login user of the information processing device 10 to another login user depending on a position where the user attempts to perform operation, the position being determined by the determination unit 160.

Furthermore, the control unit 200 can perform control to switch a SIM of the information processing device 10 to another SIM depending on a position where the user attempts to perform operation, the position being determined by the determination unit 160.

Still further, the control unit 200 can perform control to switch an imaging mode of the imaging unit 170 depending on a position where the user attempts to perform operation, the position being determined by the determination unit 160.

The control in the other modification examples described above can further improve the usability.

### <3. Hardware configuration example>

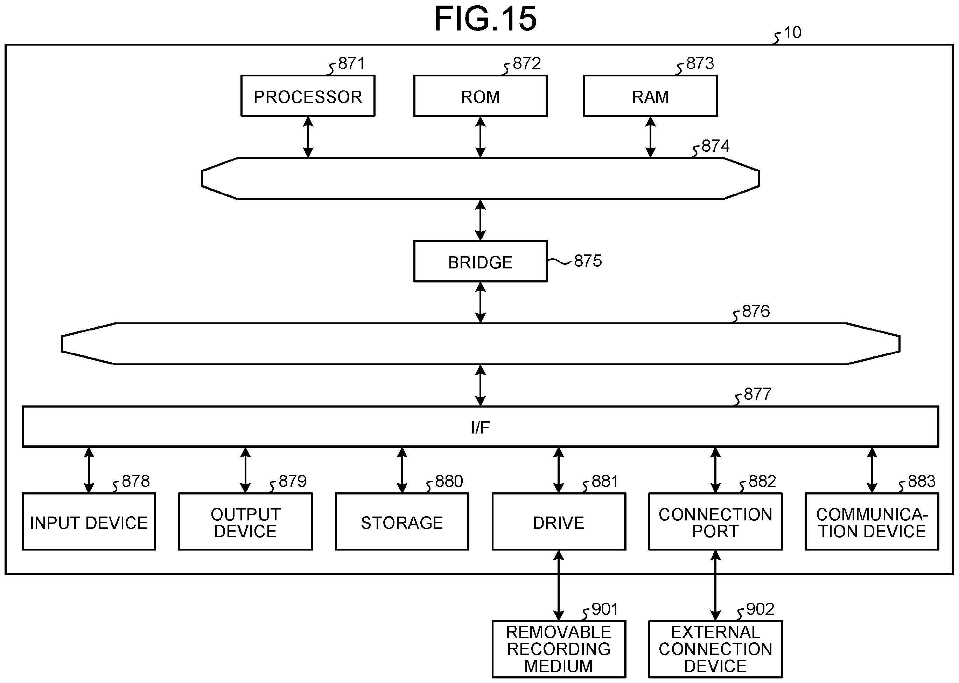

Next, a hardware configuration example of the information processing device 10 according to an embodiment of the present disclosure will be described. FIG. 15 is a block diagram illustrating a hardware configuration example of the information processing device 10 according to the embodiment of the present disclosure. Referring to FIG. 15, the information processing device 10 includes, for example, a processor 871, a ROM 872, a RAM 873, a host bus 874, a bridge 875, an external bus 876, an interface 877, an input device 878, an output device 879, a storage 880, a drive 881, a connection port 882, and a communication device 883. The hardware configuration illustrated herein is merely an example, and some of components may be omitted. Further, components other than the components illustrated herein may be further provided.

### (Processor 871)

The processor 871 functions as, for example, an arithmetic processing device or a control device and controls the entire or part of operation of each component on the basis of various programs recorded on the ROM 872, the RAM 873, the storage 880, or a removable recording medium 901. As a matter of course, the processor 871 may include a plurality of processors.

### (ROM872, RAM873)

The ROM 872 is means for storing programs to be read by the processor 871, data to be used for calculation, and the like. The RAM 873 temporarily or permanently stores, for example, programs to be read by the processor 871 and various parameters that appropriately change when the programs are executed.

### (Host bus 874, bridge 875, external bus 876, and interface 877)

The processor 871, the ROM 872, and the RAM 873 are mutually connected via, for example, the host bus 874 capable of transmitting data at a high speed. The host bus 874 is connected to, for example, the external bus 876 having a relatively low data transmission speed via the bridge 875. The external bus 876 is connected to various components via the interface 877.

### (Input device 878)

Examples of the input device 878 include a mouse, a keyboard, a touchscreen, a button, a switch, and a lever. The input device 878 can also include a remote control capable of transmitting a control signal by using infrared rays or other radio waves. The input device 878 also includes sound input devices such as a microphone and sensor devices such as an acceleration sensor and a gyroscope sensor.

### (Output device 879)

The output device 879 is a device capable of visually or audibly notifying the user of acquired information, and examples thereof include display devices such as a cathode ray tube (CRT) display, an LCD, and an organic EL display, audio output devices such as a speaker and a headphone, a printer, a mobile phone, and a facsimile. The output device 879 according to the present disclosure includes various vibration devices capable of outputting tactile stimulation.

### (Storage 880)

The storage 880 is a device for storing various kinds of data. Examples of the storage 880 include a magnetic storage device such as a hard disk drive (HDD), a semiconductor storage device, an optical storage device, and a magneto-optical storage device.

### (Drive 881)

The drive 881 is, for example, a device that reads information recorded on the removable recording medium 901 such as a magnetic disk, an optical disk, a magneto-optical disk, or a semiconductor memory or writes information to the removable recording medium 901.

### (Removable recording medium 901)

Examples of the removable recording medium 901 include a DVD medium, a Blu-ray (registered trademark) medium, an HD DVD medium, and various semiconductor storage media. As a matter of course, the removable recording medium 901 may be, for example, an IC card on which a non-contact IC chip is mounted or an electronic device.

### (Connection port 882)

The connection port 882 is, for example, a port for connecting an external connection device 902 such as a universal serial bus (USB) port, an IEEE 1394 port, a small computer system interface (SCSI), an RS-232C port, or an optical audio terminal.

### (External connection device 902)

Examples of the external connection device 902 include a printer, a portable music player, a digital camera, a digital video camera, and an IC recorder.

### (Communication device 883)

The communication device 883 is a communication device to be connected to a network, and examples thereof include communication cards for a wired or wireless LAN, Bluetooth (registered trademark), and a wireless USB (WUSB), a router for optical communication, a router for asymmetric digital subscriber line (ADSL), and modems for various types of communication.

### <4. Summary>

As described above, an information processing device (10) includes: a display unit (110); a gyroscope sensor unit (150) that measures angular velocity of the information processing device (10); and a determination unit (160) that, in response to detection of a first tilt of the information processing device (10), determines a position where a user attempts to perform operation on the display unit (110) on the basis of a first gyro waveform obtained from the angular velocity and a second gyro waveform at each operation position of the information processing device (10) measured in advance or a learning model generated by using the second gyro waveform as training data.

Therefore, it is possible to determine the position where the user attempts to perform operation on a screen of the information processing device, without impairing usability.

Although the preferred embodiments of the present disclosure have been described in detail with reference to the accompanying drawings, the technical scope of the present disclosure is not limited to such examples. It is obvious that the scope of the invention is set out in the appended claims.

The effects described in the present specification are merely illustrative or exemplary and are not restrictive. That is, the technology according to the present disclosure can have other effects obvious to those skilled in the art from the description of the present specification in addition to or instead of the above effects.

### Reference Signs List

- 10: INFORMATION PROCESSING DEVICE
- 110: DISPLAY UNIT
- 120: OPERATION UNIT
- 130: STORAGE UNIT
- 140: ACCELERATION SENSOR UNIT
- 150: GYROSCOPE SENSOR UNIT
- 160: DETERMINATION UNIT
- 170: IMAGING UNIT
- 200: CONTROL UNIT

## Claims

1. An information processing device (10) comprising:
a display unit (110);
an acceleration sensor unit (140) that is configured to detect a tilt of the information processing device;
a gyroscope sensor unit (150) that is configured to measure angular velocity of the information processing device; and **characterised by** further comprising:
a determination unit (160) that, in response to detection of a first tilt of the information processing device, is configured to determine a position where a user attempts to perform operation on the display unit on the basis of a first gyro waveform obtained from the angular velocity and a second gyro waveform at each operation position of the information processing device measured in advance or a learning model generated by using the second gyro waveform as training data, wherein:
the acceleration sensor unit further is configured to detect a direction of gravity with respect to the information processing device;
the determination unit further is configured to determine a direction of the information processing device on the basis of the tilt of the information processing device and the direction of gravity; and
the information processing device further includes a control unit (200) that is configured to stop a function of the gyroscope sensor unit in a case where the direction of the information processing device is a predetermined direction.

2. The information processing device according to claim 1, wherein
the determination unit further is configured to determine a rotation direction of the information processing device on the basis of the angular velocity, and
determine the position where the user attempts to perform operation on the display unit on the basis of the rotation direction.

3. The information processing device according to claim 1, wherein
the display unit further is configured to display a screen displayed on the display unit while reducing the screen by a predetermined amount in accordance with the determined position.

4. The information processing device according to claim 3, wherein:
in response to detection of a second tilt of the information processing device, the determination unit further is configured to determine whether or not the user attempts to return the tilt of the information processing device to an original angle that is a state before the first tilt is detected with the second tilt; and
in a case where it is determined that the user returns the tilt of the information processing device to the original angle, the display unit further is configured to display the screen while enlarging the screen by a predetermined amount.

5. The information processing device according to claim 1, wherein
the display unit further is configured to display a screen displayed on the display unit while moving the screen by a predetermined amount in a predetermined direction in accordance with the determined position.

6. The information processing device according to claim 5, wherein:
in response to detection of a second tilt of the information processing device, the determination unit further is configured to determine whether or not the user attempts to return the tilt of the information processing device to an original angle that is a state before the first tilt is detected with the second tilt; and
in a case where it is determined that the user returns the tilt of the information processing device to the original angle, the display unit further is configured to display the screen while moving the screen by the predetermined amount in a direction opposite to the predetermined direction.

7. The information processing device according to claim 6, wherein
the second tilt used by the determination unit is detected by the acceleration sensor unit and the gyroscope sensor unit.

8. The information processing device according to claim 1, wherein
the determination by the determination unit as to the position where the user attempts to perform operation includes
in a case where the user holds the information processing device with the user's right hand, determining the position where the user attempts to perform operation on the display unit on the basis of the first gyro waveform and a third gyro waveform at each operation position of the information processing device measured in advance in response to a touch operation of the right hand or a second learning model generated by using the third gyro waveform as training data, and
in a case where the user holds the information processing device with the user's left hand, determining the position where the user attempts to perform operation on the display unit on the basis of the first gyro waveform and a fourth gyro waveform at each operation position of the information processing device measured in advance in response to a touch operation of the left hand or a third learning model generated by using the fourth gyro waveform as training data.

9. The information processing device according to claim 1, wherein
the determination unit further is configured to determine whether the user holds the information processing device with the user's right hand or left hand on the basis of a position and track of a swipe operation performed on the display unit.

10. The information processing device according to claim 1, wherein
the determination unit further
is configured to determine whether or not the determination on the position where the user attempts to perform operation is correct on the basis of an operation that the user performs after the position where the user attempts to perform operation is determined, and
perform machine learning by using, as learning data, a result of the determination on whether or not the position where the user attempts to perform operation is correct.

11. The information processing device according to claim 1, further comprising
an imaging unit including a front-facing camera, wherein
the determination unit further is configured to determine the position where the user attempts to perform operation on the display unit on the basis of how the user appears in an image captured by the front-facing camera.

12. The information processing device according to claim 3, wherein
the display unit further is configured to display a user interface in a blank space of the screen obtained as a result of display of the screen reduced by a predetermined amount.

13. The information processing device according to claim 5, wherein
the display unit further is configured to display a user interface in a blank space of the screen obtained as a result of moving the screen by a predetermined amount in a predetermined direction.

14. The information processing device according to claim 1, wherein
the display unit further is configured to switch content displayed on the display unit to another content in accordance with the determined position.

## Patentansprüche

1. Informationsverarbeitungsvorrichtung (10), umfassend:
eine Anzeigeeinheit (110);
eine Beschleunigungssensoreinheit (140), die konfiguriert ist, um eine Neigung der Informationsverarbeitungsvorrichtung zu erfassen;
eine Gyroskopsensoreinheit (150), die konfiguriert ist, um die Winkelgeschwindigkeit der Informationsverarbeitungsvorrichtung zu messen; und
**gekennzeichnet durch** ferner umfassend:
eine Bestimmungseinheit (160), die als Reaktion auf das Erfassen einer ersten Neigung der Informationsverarbeitungsvorrichtung konfiguriert ist, um eine Position zu bestimmen, in der ein Benutzer versucht, einen Vorgang auf der Anzeigeeinheit durchzuführen, basierend auf einer ersten Gyrowellenform, die aus der Winkelgeschwindigkeit erhalten wird, und einer zweiten Gyrowellenform an jeder Betriebsposition der Informationsverarbeitungsvorrichtung, die im Voraus gemessen wird, oder einem Lernmodell, das durch Verwenden der zweiten Gyrowellenform als Trainingsdaten erzeugt wird, wobei:
die Beschleunigungssensoreinheit ferner konfiguriert ist, um eine Schwerkraftrichtung in Bezug auf die Informationsverarbeitungsvorrichtung zu erfassen;
die Bestimmungseinheit ferner konfiguriert ist, um eine Richtung der Informationsverarbeitungsvorrichtung basierend auf der Neigung der Informationsverarbeitungsvorrichtung und der Richtung der Schwerkraft zu bestimmen; und
die Informationsverarbeitungsvorrichtung ferner eine Steuereinheit (200) einschließt, die konfiguriert ist, um eine Funktion der Gyroskopsensoreinheit in einem Fall zu stoppen, in dem die Richtung der Informationsverarbeitungsvorrichtung eine vorbestimmte Richtung ist.

2. Informationsverarbeitungsvorrichtung nach Anspruch 1, wobei
die Bestimmungseinheit ferner konfiguriert ist, um eine Drehrichtung der Informationsverarbeitungsvorrichtung basierend auf der Winkelgeschwindigkeit zu bestimmen, und
die Position, in der der Benutzer versucht, einen Vorgang auf der Anzeigeeinheit durchzuführen, basierend auf der Drehrichtung zu bestimmen.

3. Informationsverarbeitungsvorrichtung nach Anspruch 1, wobei
die Anzeigeeinheit ferner konfiguriert ist, um einen auf der Anzeigeeinheit angezeigten Bildschirm anzuzeigen, während der Bildschirm gemäß der bestimmten Position um einen vorbestimmten Betrag verringert wird.

4. Informationsverarbeitungsvorrichtung nach Anspruch 3, wobei:
als Reaktion auf das Erfassen einer zweiten Neigung der Informationsverarbeitungsvorrichtung, die Bestimmungseinheit ferner konfiguriert ist, um zu bestimmen, ob der Benutzer versucht, die Neigung der Informationsverarbeitungsvorrichtung zu einem ursprünglichen Winkel zurückzuführen, der ein Zustand ist, bevor die erste Neigung mit der zweiten Neigung erfasst wird, oder nicht; und
in einem Fall, in dem bestimmt wird, dass der Benutzer die Neigung der Informationsverarbeitungsvorrichtung zu dem ursprünglichen Winkel zurückführt, die Anzeigeeinheit ferner konfiguriert ist, um den Bildschirm anzuzeigen, während der Bildschirm um einen vorbestimmten Betrag vergrößert wird.

5. Informationsverarbeitungsvorrichtung nach Anspruch 1, wobei
die Anzeigeeinheit ferner konfiguriert ist, um einen auf der Anzeigeeinheit angezeigten Bildschirm anzuzeigen, während der Bildschirm gemäß der bestimmten Position um einen vorbestimmten Betrag in einer vorbestimmten Richtung bewegt wird.

6. Informationsverarbeitungsvorrichtung nach Anspruch 5, wobei:
als Reaktion auf das Erfassen einer zweiten Neigung der Informationsverarbeitungsvorrichtung, die Bestimmungseinheit ferner konfiguriert ist, um zu bestimmen, ob der Benutzer versucht, die Neigung der Informationsverarbeitungsvorrichtung zu einem ursprünglichen Winkel zurückzuführen, der ein Zustand ist, bevor die erste Neigung mit der zweiten Neigung erfasst wird, oder nicht; und
in einem Fall, in dem bestimmt wird, dass der Benutzer die Neigung der Informationsverarbeitungsvorrichtung zu dem ursprünglichen Winkel zurückführt, die Anzeigeeinheit ferner konfiguriert ist, um den Bildschirm anzuzeigen, während der Bildschirm um den vorbestimmten Betrag in einer Richtung entgegengesetzt der vorbestimmten Richtung bewegt wird.

7. Informationsverarbeitungsvorrichtung nach Anspruch 6, wobei
die zweite Neigung, die von der Bestimmungseinheit verwendet wird, von der Beschleunigungssensoreinheit und der Gyroskopsensoreinheit erfasst wird.

8. Informationsverarbeitungsvorrichtung nach Anspruch 1, wobei
die Bestimmung durch die Bestimmungseinheit in der Position, in der der Benutzer versucht, den Vorgang durchzuführen, Folgendes einschließt
in einem Fall, in dem der Benutzer die Informationsverarbeitungsvorrichtung mit der rechten Hand des Benutzers hält, Bestimmen der Position, in der der Benutzer versucht, den Vorgang auf der Anzeigeeinheit durchzuführen, basierend auf der ersten Gyrowellenform und einer dritten Gyrowellenform an jeder Betriebsposition der Informationsverarbeitungsvorrichtung, die im Voraus als Reaktion auf einen Berührungsvorgang der rechten Hand oder ein zweites Lernmodell, das durch Verwenden der dritten Gyrowellenform als Trainingsdaten erzeugt wird, gemessen wird, und
in einem Fall, in dem der Benutzer die Informationsverarbeitungsvorrichtung mit der linken Hand des Benutzers hält, Bestimmen der Position, in der der Benutzer versucht, den Vorgang auf der Anzeigeeinheit durchzuführen, basierend auf der ersten Gyrowellenform und einer vierten Gyrowellenform an jeder Betriebsposition der Informationsverarbeitungsvorrichtung, die im Voraus als Reaktion auf einen Berührungsvorgang der linken Hand oder ein drittes Lernmodell, das durch Verwenden der vierten Gyrowellenform als Trainingsdaten erzeugt wird, gemessen wird.

9. Informationsverarbeitungsvorrichtung nach Anspruch 1, wobei
die Bestimmungseinheit ferner konfiguriert ist, um zu bestimmen, ob der Benutzer die Informationsverarbeitungsvorrichtung mit der rechten Hand oder linken Hand des Benutzers hält, basierend auf einer Position und Bahn eines auf der Anzeigeeinheit durchgeführten Wischvorgangs.

10. Informationsverarbeitungsvorrichtung nach Anspruch 1, wobei
die Bestimmungseinheit ferner konfiguriert ist, um zu bestimmen, ob die Bestimmung an der Position, an der der Benutzer versucht, den Vorgang durchzuführen, basierend auf einem Vorgang bestimmt wird, den der Benutzer nach der Position durchführt, in der der Benutzer versucht, den Vorgang durchzuführen, korrekt ist oder nicht, und
Maschinenlernen durch Verwenden, als Lerndaten, eines Ergebnisses der Bestimmung daraufhin durchzuführen, ob die Position, in der der Benutzer versucht, den Vorgang durchzuführen, korrekt ist oder nicht.

11. Informationsverarbeitungsvorrichtung nach Anspruch 1, ferner umfassend
eine Bildgebungseinheit, die eine vorderseitige Kamera einschließt, wobei
die Bestimmungseinheit ferner konfiguriert ist, um die Position zu bestimmen, in der der Benutzer versucht, einen Vorgang auf der Anzeigeeinheit durchzuführen, basierend darauf, wie der Benutzer in einem Bild erscheint, das von der vorderseitigen Kamera aufgenommen wird.

12. Informationsverarbeitungsvorrichtung nach Anspruch 3, wobei
die Anzeigeeinheit ferner konfiguriert ist, um eine Benutzerschnittstelle in einem leeren Raum des Bildschirms anzuzeigen, der als ein Ergebnis der Anzeige des Bildschirms, der um einen vorbestimmten Betrag verringert ist, erhalten wird.

13. Informationsverarbeitungsvorrichtung nach Anspruch 5, wobei
die Anzeigeeinheit ferner konfiguriert ist, um eine Benutzerschnittstelle in einem leeren Raum des Bildschirms anzuzeigen, der als ein Ergebnis des Bewegens des Bildschirms um einen vorbestimmten Betrag in einer vorbestimmten Richtung erhalten wird.

14. Informationsverarbeitungsvorrichtung nach Anspruch 1, wobei
die Anzeigeeinheit ferner konfiguriert ist, um den auf der Anzeigeeinheit angezeigten Inhalt auf einen anderen Inhalt gemäß der bestimmten Position umzuschalten.

## Revendications

1. Dispositif de traitement d'informations (10) comprenant :
une unité d'affichage (110) ;
une unité de capteur d'accélération (140) qui est configurée pour détecter une inclinaison du dispositif de traitement d'informations ;
une unité de capteur de gyroscope (150) qui est configurée pour mesurer une vitesse angulaire du dispositif de traitement d'informations ; et
**caractérisé en ce qu'**il comprend en outre :
une unité de détermination (160) qui, en réponse à la détection d'une première inclinaison du dispositif de traitement d'informations, est configurée pour déterminer une position dans laquelle un utilisateur tente d'effectuer une opération sur l'unité d'affichage sur la base d'une première forme d'onde gyroscopique obtenue à partir de la vitesse angulaire et d'une deuxième forme d'onde gyroscopique à chaque position d'opération du dispositif de traitement d'informations mesurée à l'avance ou d'un modèle d'apprentissage généré à l'aide de la deuxième forme d'onde gyroscopique en tant que données d'apprentissage, dans lequel :
l'unité de capteur d'accélération est en outre configurée pour détecter une direction de gravité par rapport au dispositif de traitement d'informations ;
l'unité de détermination est en outre configurée pour déterminer une direction du dispositif de traitement d'informations sur la base de l'inclinaison du dispositif de traitement d'informations et de la direction de gravité ; et
le dispositif de traitement d'informations comporte en outre une unité de commande (200) qui est configurée pour arrêter une fonction de l'unité de capteur de gyroscope dans un cas où la direction du dispositif de traitement d'informations est une direction prédéterminée.

2. Dispositif de traitement d'informations selon la revendication 1, dans lequel
l'unité de détermination est en outre configurée pour déterminer une direction de rotation du dispositif de traitement d'informations sur la base de la vitesse angulaire, et
déterminer la position dans laquelle l'utilisateur tente d'effectuer une opération sur l'unité d'affichage sur la base de la direction de rotation.

3. Dispositif de traitement d'informations selon la revendication 1, dans lequel
l'unité d'affichage est en outre configurée pour afficher un écran affiché sur l'unité d'affichage tout en réduisant l'écran d'une quantité prédéterminée conformément à la position déterminée.

4. Dispositif de traitement d'informations selon la revendication 3, dans lequel :
en réponse à la détection d'une seconde inclinaison du dispositif de traitement d'informations, l'unité de détermination est en outre configurée pour déterminer si l'utilisateur tente ou non de ramener l'inclinaison du dispositif de traitement d'informations à un angle d'origine qui est un état avant la détection de la première inclinaison avec la seconde inclinaison ; et
dans un cas où il est déterminé que l'utilisateur ramène l'inclinaison du dispositif de traitement d'informations à l'angle d'origine, l'unité d'affichage est en outre configurée pour afficher l'écran tout en agrandissant l'écran d'une quantité prédéterm inée.

5. Dispositif de traitement d'informations selon la revendication 1, dans lequel
l'unité d'affichage est en outre configurée pour afficher un écran affiché sur l'unité d'affichage tout en déplaçant l'écran d'une quantité prédéterminée dans une direction prédéterminée conformément à la position déterminée.

6. Dispositif de traitement d'informations selon la revendication 5, dans lequel :
en réponse à la détection d'une seconde inclinaison du dispositif de traitement d'informations, l'unité de détermination est en outre configurée pour déterminer si l'utilisateur tente ou non de ramener l'inclinaison du dispositif de traitement d'informations à un angle d'origine qui est un état avant la détection de la première inclinaison avec la seconde inclinaison ; et
dans un cas où il est déterminé que l'utilisateur ramène l'inclinaison du dispositif de traitement d'informations à l'angle d'origine, l'unité d'affichage est en outre configurée pour afficher l'écran tout en déplaçant l'écran par la quantité prédéterminée dans une direction opposée à la direction prédéterminée.

7. Dispositif de traitement d'informations selon la revendication 6, dans lequel
la seconde inclinaison utilisée par l'unité de détermination est détectée par l'unité de capteur d'accélération et l'unité de capteur de gyroscope.

8. Dispositif de traitement d'informations selon la revendication 1, dans lequel
la détermination par l'unité de détermination par rapport à la position dans laquelle l'utilisateur tente d'effectuer une opération comporte
dans un cas où l'utilisateur tient le dispositif de traitement d'informations avec la main droite de l'utilisateur, la détermination de la position dans laquelle l'utilisateur tente d'effectuer une opération sur l'unité d'affichage sur la base de la première forme d'onde gyroscopique et d'une troisième forme d'onde gyroscopique à chaque position d'opération du dispositif de traitement d'informations mesurée à l'avance en réponse à une opération tactile de la main droite ou d'un second modèle d'apprentissage généré à l'aide de la troisième forme d'onde gyroscopique en tant que données d'apprentissage, et
dans un cas où l'utilisateur tient le dispositif de traitement d'informations avec la main gauche de l'utilisateur, la détermination de la position dans laquelle l'utilisateur tente d'effectuer une opération sur l'unité d'affichage sur la base de la première forme d'onde gyroscopique et d'une quatrième forme d'onde gyroscopique à chaque position d'opération du dispositif de traitement d'informations mesurée à l'avance en réponse à une opération tactile de la main gauche ou d'un troisième modèle d'apprentissage généré à l'aide de la quatrième forme d'onde gyroscopique en tant que données d'apprentissage.

9. Dispositif de traitement d'informations selon la revendication 1, dans lequel
l'unité de détermination est en outre configurée pour déterminer si l'utilisateur tient le dispositif de traitement d'informations avec la main droite ou la main gauche de l'utilisateur sur la base d'une position et d'une trace d'une opération de balayage effectuée sur l'unité d'affichage.

10. Dispositif de traitement d'informations selon la revendication 1, dans lequel
l'unité de détermination est en outre configurée pour déterminer si la détermination sur la position dans laquelle l'utilisateur tente d'effectuer une opération est correcte ou non sur la base d'une opération effectuée par l'utilisateur après la détermination de la position dans laquelle l'utilisateur tente d'effectuer une opération, et
effectuer un apprentissage automatique à l'aide, en tant que données d'apprentissage, d'un résultat de la détermination du fait de savoir si la position où l'utilisateur tente d'effectuer une opération est correcte ou non.

11. Dispositif de traitement d'image selon la revendication 1, comprenant en outre
une unité d'imagerie comportant une caméra orientée vers l'avant, dans lequel
l'unité de détermination est en outre configurée pour déterminer la position dans laquelle l'utilisateur tente d'effectuer une opération sur l'unité d'affichage sur la base de la manière dont l'utilisateur apparaît dans une image capturée par la caméra orientée vers l'avant.

12. Dispositif de traitement d'informations selon la revendication 3, dans lequel
l'unité d'affichage est en outre configurée pour afficher une interface utilisateur dans un espace vierge de l'écran obtenu en tant que résultat d'affichage de l'écran réduit d'une quantité prédéterminée.

13. Dispositif de traitement d'informations selon la revendication 5, dans lequel
l'unité d'affichage est en outre configurée pour afficher une interface utilisateur dans un espace vierge de l'écran obtenu suite à un déplacement de l'écran d'une quantité prédéterminée dans une direction prédéterminée.

14. Dispositif de traitement d'informations selon la revendication 1, dans lequel
l'unité d'affichage est en outre configurée pour commuter un contenu affiché sur l'unité d'affichage vers un autre contenu conformément à la position déterminée.
